# FASCICULE DE BREVET EUROPEEN

(11) **EP 3 948 496 B1**
(45) Date de publication et mention de la délivrance du brevet: **18.10.2023**
(21) Numéro de dépôt: 20711996.7
(22) Date de dépôt: 24.03.2020
(51) Int. Cl.: G06F 3/01, G04G 9/00, G09B 21/00, G04G 21/08

(54) **DISPOSITIF DE COMMUNICATION TACTILE, SYSTEME ET PROCEDE DE COMMUNICATION TACTILE INTEGRANT CE DISPOSITIF**
TAKTILE KOMMUNIKATIONSVORRICHTUNG UND SYSTEM, UND TAKTILES KOMMUNIKATIONSVERFAHREN DIESE VORRICHTUNG VERWENDEND
TACTILE COMMUNICATION DEVICE AND SYSTEM, TACTILE COMMUNICATION METHOD USING THIS DEVICE

(30) Priorité: 28.03.2019 FR 1903272
(43) Date de publication de la demande: 09.02.2022
(73) Titulaire: Caylar, 91140 Villebon Sur Yvette (FR)
(72) Inventeur: GERMAIN, Jean-Claude, 91140 VILLEBON-SUR-YVETTE (FR); GERMAIN, Cédric, 91140 VILLEBON-SUR-YVETTE (FR); ARNOLD, Gabriel, 91140 VILLEBON-SUR-YVETTE (FR)
(74) Mandataire: Plasseraud IP
(86) Numéro de dépôt international: PCT/EP2020/058237
(87) Numéro de publication internationale: WO 2020/193587

(56) Documents cités:
- US-A1- 2003 117 371
- US-A1- 2015 379 895
- US-A1- 2018 253 147

## Description

### Domaine technique

Le domaine de l'invention est celui de la communication tactile.

L'invention concerne plus spécifiquement un dispositif apte à convertir des signaux électriques en signaux tactiles susceptibles d'être détectés par des capteurs, tels que les récepteurs tactiles cutanés.

L'invention vise également un système et un procédé de communication tactile intégrant ce dispositif.

### Technique antérieure

Lorsque les moyens de communication que sont la vue et l'audition sont absents, déficients, perturbés ou surchargés, il est possible de communiquer par le toucher.

Le sens du toucher fait intervenir différents récepteurs cutanés, à savoir les mécano-récepteurs (toucher *stricto sensu* / vibrations / sensations positionnelles/pression), les thermorécepteurs et les nocirécepteurs (douleurs).

Sans que cela ne soit limitatif, on s'intéresse plus particulièrement dans le cadre de cette invention, au stimulus vibratoire.

La communication tactile passe par l'émission de signaux, par exemple vibratoires, et par la réception de ces signaux par les récepteurs cutanés et, plus spécifiquement, par les mécano- récepteurs cutanés.

Pour créer un langage tactile riche, il importe que les signaux produits soient des motifs tactiles élaborés, nombreux et variés. Chaque motif tactile transmis à la peau a un sens et forme un élément de langage.

À cette fin, le dispositif produisant des signaux tactiles, et, en particulier des vibrations, doit comprendre une pluralité de sources vibratoires qui permettent de tracer sur la peau des motifs tactiles complexes et précis, sur une surface cutanée de taille suffisante pour permettre aux mécano-récepteurs cutanés de détecter et de discriminer les différents signaux constituant les motifs vibratoires transmis. Les motifs tactiles doivent être ressentis de manière précise et suffisamment puissante.

La demande de brevet WO2014/140079A1 décrit un dispositif de communication tactile ayant la forme d'une ceinture, d'un brassard, d'un collier, de chaussures, d'une veste, d'un chapeau ou de tout autre objet adapté pour être positionné au niveau d'une partie du corps d'une personne.

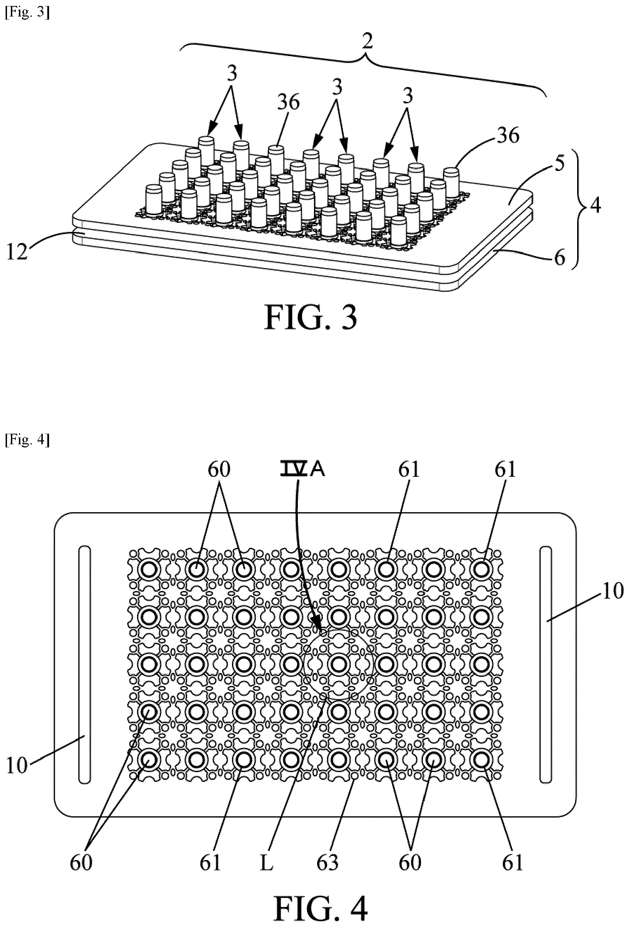

Ce dispositif est, par exemple, un bracelet qui présente, sur son pourtour :
- une pluralité de capteurs d'entrées tactiles 14 (figure 3a) ;
- une pluralité d'actionneurs tactiles 22 (figure 3b) ;
- ou une pluralité de capteurs tactiles 14 et une pluralité d'actionneurs tactiles 22 capables de stimuler des zones distinctes de la partie du corps (figure 3c).

Les capteurs d'entrée tactile 14 peuvent être constitués par des boutons sur lesquels on appuie pour créer un message enrichi reçu par le bracelet ne comprenant que des actionneurs tactiles 22 (vibreurs) qui traduiront le message enrichi en vibrations perçues par le porteur du bracelet.

Les actionneurs tactiles 22 sont, par exemple, au nombre de 4, disposés chacun à égale distance du précédent et du suivant, et donc face-à-face deux à deux, sur le pourtour du bracelet.

Ces dispositifs connus ne permettent pas de délivrer des motifs tactiles complexes et précis.

Ils ne comprennent en effet que 4 stimuli vibratoires discrets, qui sont relativement éloignés les uns des autres et qui délivrent des signaux successifs. Ainsi, seul un nombre très limité de motifs peut être tracé sur la peau. De plus, ces dispositifs connus ne permettent pas un arrangement bidimensionnel des stimuli vibratoires sur la peau. Cela appauvrit significativement le langage de communication.

D'autres dispositifs tactiles connus de l'art antérieur sont décrits dans les documents US 2018/253147 A1, US 2015/379895 A1 et US 2003/117371 A1.

La demande de brevet français N°2993066 divulgue un dispositif tactile d'aide à la navigation destiné à être porté par un utilisateur. Ce dispositif comprend un boîtier-interface tactile qui présente une surface de contact tactile déformable. Plusieurs actionneurs sont contenus, selon un arrangement bidimensionnel, dans ce boîtier-interface tactile. Ce dernier est déplaçable à l'intérieur de la surface contact tactile, de manière à rendre celle-ci déformable. Ces actionneurs sont activables par des moyens électromagnétiques comprenant une structure flexible monolithique en matériau ferromagnétique, comportant, en son centre, une bague, exempte d'actionneurs, fixe par rapport au boîtier et à partir de laquelle s'étendent 6 à 8 poutres déformables à l'extrémité libre de chacune desquelles est positionné un actionneur déplaçable (aimant) dans une bobine. Les actionneurs sont répartis sur une ellipse. Cela donne au boîtier-interface tactile une forme générale elliptique et cela rend impossible un arrangement matriciel des actionneurs. Ce dispositif n'offre pas la possibilité d'un agencement homogène des stimuli vibratoires, pas plus que la possibilité d'avoir un langage de communication riche, compte tenu du nombre limité d'actionneurs vibratoires. En outre, la configuration elliptique des actionneurs à l'extrémité de poutres flexibles reliées en leur centre par une bague, ne permet pas de garantir une mise en contact de tous les actionneurs avec la peau.

### Problème technique- Objectifs de l'invention

Dans ce contexte, un premier problème qui se pose est donc de produire des signaux tactiles, en particulier vibratoires, apte à être détectés par des récepteurs cutanés et permettant l'utilisation d'un langage de communication tactile riche.

Un second problème est de fournir la possibilité de création d'un langage tactile riche en traçant des motifs tactiles de formes différentes, complexes et variées sur différentes parties de la surface corporelle, en permettant une détection précise, sensible et puissante, sur une surface de peau de taille donnée.

Un troisième problème est de proposer un dispositif de communication tactile, permettant de tracer des motifs tactiles nombreux, différents, complexes et variés, sur une surface de peau de taille donnée.

Un quatrième problème est de fournir un dispositif de communication tactile comportant une pluralité d'éléments vibratoires également dénommés actionneurs tactiles : "tactons", sur une surface donnée, selon une densité surfacique de préférence supérieure à un tacton pour 100 cm², lesdits tactons étant aptes à produire des vibrations puissantes et spatialement précises.

Un cinquième problème est de fournir un dispositif de communication tactile se présentant sous forme de matrice tactile, de préférence vibratoire, avec une haute densité de pixels tactiles, de préférence arrangés de manière bidimensionnelle.

Un sixième problème est de fournir un dispositif de communication tactile ou comportant une pluralité d'éléments vibratoires également dénommés actionneurs tactiles : "tactons", sur une surface donnée, selon une densité surfacique, de préférence supérieure à un tacton pour 100 cm², lesdits tactons pouvant tous être mis en contact avec la surface corporelle à stimuler.

C'est ainsi que la présente invention vise à satisfaire à au moins l'un des objectifs énoncés ci-après.

L'un des objectifs essentiels de la présente invention est de fournir un dispositif de communication tactile apportant une solution performante, simple et économique, à chacun des problèmes techniques mentionnés ci-dessus.

L'un des objectifs essentiels de la présente invention est de fournir un dispositif de communication tactile performant, robuste, simple et économique, permettant d'établir une communication tactile, riche, élaborée efficace avec un individu porteur de dispositif.

L'un des objectifs essentiels de la présente invention est de fournir un système de communication tactile performant, fiable et efficace, comprenant le dispositif mentionné dans les objectifs ci-dessus.

L'un des objectifs essentiels de la présente invention est de fournir un procédé de communication tactile performant, fiable et efficace, comprenant le système mentionné dans l'objectif ci-dessus.

### Exposé de l'invention

Ces objectifs, parmi d'autres, sont atteints par la présente invention qui concerne, en premier lieu, un dispositif de communication tactile équipée d'au moins un module comprenant des actionneurs tactiles, de préférence vibratoires, ou "tactons", comportant chacun au moins une zone tactile destinée à être appliquée, directement ou non, sur la peau d'un individu ; ledit dispositif ayant les caractéristiques suivantes :
- la zone tactile de chaque tacton est disposée au voisinage de l'une de ses extrémités, dénommée extrémité libre tactile et opposée à l'extrémité de base du tacton ;
- chaque tacton comprend un corps cylindrique présentant une hauteur, une face plane inférieure et une face plane supérieure identiques, la face plane inférieure étant située du côté de l'extrémité de base (37) et la face plane supérieure étant située du côté de l'extrémité libre tactile (35) ;
- le corps cylindrique de chaque tacton présente un facteur de forme F, défini par le rapport de sa hauteur sur la plus grande longueur des faces planes inférieure et supérieure, tel que F > 1 ; de préférence 4 ≥ F > 1 ; et, plus préférentiellement encore, 4 ≥ F ≥ 2 ;
- chaque tacton contient au moins une source tactile, de préférence vibratoire ;
- les tactons sont reliés par leurs extrémités de base à un support souple de fixation comprenant au moins une plaque ; de préférence entre une et trois plaques; chaque tacton étant en partie emmanché, par son extrémité de base, dans une ouverture de la plaque du support souple, la longueur de la partie emmanchée du tacton étant, de préférence, comprise entre 25% et 60% de la longueur du tacton;
- et chaque plaque du support souple de fixation est réalisée dans un matériau souple, présentant un module d'Young compris entre 0,001 GPa et 0,5 GPa.

On entend par support « *souple* » que le support est apte à se déformer de façon réversible. Lorsqu'une contrainte est appliquée sur le support, le support se déforme, et lorsque la contrainte n'est plus appliquée sur le support, celui-ci retrouve sensiblement sa forme initiale et ses dimensions initiales. Le support peut, selon l'invention, être dans un matériau présentant un module d'Young compris entre 0,001 GPa et 0,5 GPa, de préférence compris entre 0,001 GPa et 0,1 GPa. En particulier, la ou les plaques comprises par le support souple présentent chacune les caractéristiques de souplesse associées au support souple. Autrement dit, la ou les plaques comprises par le support souple sont aptes à se déformer de façon réversible et sont par exemple dans un matériau présentant un module d'Young compris entre 0,001 GPa et 0,5 GPa, de préférence compris entre 0,001 GPa et 0,1 GPa.

Les zones tactiles terminales des tactons, c'est-à-dire les interfaces tactiles, peuvent être en contact direct avec la peau ou bien encore séparées de celle-ci par une ou plusieurs couches de vêtements. Cela suppose naturellement, d'adapter la puissance vibratoire des tactons en conséquence.

Il est du mérite des inventeurs d'avoir conçu ce dispositif de communication tactile qui présente entre autres les avantages suivants :
- La densité surfacique de tactons est élevée.
- La zone tactile de chaque tacton qui constitue l'interface tactile, est de petite taille, de sorte que le stimulus tactile produit, en particulier la vibration, est précis et puissant (rapport énergie/surface).
- L'encombrement du dispositif, et plus spécifiquement du module de tactons, est réduit.
- Le dispositif est un modèle d'intégration mécanique.
- Le support de fixation permet, d'une part, de maintenir de manière rigide et stable les tactons dans leurs positions respectives, et, d'autre part, de limiter la propagation transversale des vibrations de manière à les rendre d'autant plus puissantes et spatialement précises.
- Une fois mis en place sur une surface cutanée, le dispositif assure un contact, direct ou indirect, avec la peau, de tous les tactons, et en particulier de leur zone tactile ou interface.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Il est intéressant de noter que la densité des tactons est comprise entre 1 et 300 tactons pour 100 cm², de préférence entre 1 et 30 tactons pour 10 cm², et, plus préférentiellement encore entre 1 et 20 tactons pour 10 cm².

Il est à noter que l'invention est remarquable en ce que les tactons forment un arrangement matriciel.

Avantageusement, la zone tactile de chaque tacton est formée par la face plane supérieure du corps cylindrique. De façon alternative, la zone tactile de chaque tacton est formée par une capsule positionnée sur la face plane supérieure du corps cylindrique. De préférence, la capsule peut avoir une forme de dôme ou d'hémisphère.

Avantageusement, l'extrémité de base de chaque tacton est formée par la face plane inférieure du corps cylindrique.

Avantageusement, l'axe d'élongation de chaque tacton, correspondant à l'axe de sa hauteur, est sensiblement orthogonal au support souple de fixation, quand il repose à plat sur un support plan.

Il en résulte qu'une fois mis en place sur la surface cutanée destinée à recevoir les signaux tactiles, les axes d'élongation des tactons du dispositif sont aussi sensiblement orthogonaux à la surface cutanée. Le contact entre la surface cutanée et le tacton est ainsi optimisé.

Avantageusement, le support souple de fixation des tactons comprend au moins une plaque et chaque tacton est en partie emmanché, par son extrémité de base, dans une ouverture de la plaque du support souple, la longueur de la partie emmanchée du tacton étant de préférence comprise entre 25% et 60% de la longueur du tacton.

Selon un mode préféré de réalisation du support souple de fixation des tactons, ce dernier comprend une plaque interne, le terme "interne" étant défini en prenant la peau comme référentiel spatial, et au moins une plaque externe.
En outre, toujours selon ce mode de réalisation, chaque tacton est en partie emmanché, par son extrémité de base, dans une ouverture de la plaque interne et dans une ouverture de la plaque externe du support souple; de préférence de telle sorte que la plaque interne et la plaque externe soient espacées l'une de l'autre par une couche interstitielle.

Sur une caractéristique intéressante de l'invention, chaque plaque du support souple est réalisée dans un matériau souple, de préférence choisi dans la famille des élastomères.
En particulier, la plaque interne et la plaque externe sont réalisées dans un matériau souple, de préférence choisi dans la famille des élastomères.
Parmi les élastomères appropriés, on peut citer les caoutchoucs naturels ou synthétiques, le latex ainsi que les élastomères silicones.

De préférence, tout ou partie des ouvertures de chaque plaque du support souple de fixation des tactons sont définies chacune par une bague dissociée du reste de la plaque et reliée à celle-ci par au moins deux pontets, de préférence quatre ; cette bague et ces pontets étant avantageusement réalisés dans le même matériau que celui de la plaque.
En particulier, tout ou partie des ouvertures des plaques interne et externe du support souple de fixation des tactons sont définies chacune par une bague dissociée du reste de la plaque interne ou externe et reliée à celle-ci par au moins deux pontets, de préférence quatre ; cette bague et ces pontets étant avantageusement réalisés dans le même matériau que celui de la plaque interne ou externe.

Plus préférablement encore, les zones du support souple, de préférence de chaque plaque, auxquelles sont reliés les pontets des bagues délimitant les ouvertures de fixation des tactons, sont ajourées.
En particulier, les zones du support souple, de préférence des plaques interne et externe, auxquelles sont reliés les pontets des bagues délimitant les ouvertures de fixation des tactons, sont ajourées.

S'agissant du stimulus tactile, et plus spécialement du stimulus vibratoire, il est prévu conformément à une modalité remarquable de l'invention, que chaque tacton comprenne une source vibratoire, de préférence un moteur apte à entraîner un arbre porteur d'au moins une masse excentrique ou un vibreur à résonnance linéaire.

La structure de chaque tacton est ainsi faite, conformément à une disposition privilégiée de l'invention, que chaque tacton comprend une enveloppe tubulaire contenant la source, de préférence vibratoire, cette enveloppe étant avantageusement de section transversale droite circulaire.

Selon une autre caractéristique remarquable de l'invention, la source vibratoire est avantageusement disposée à l'intérieur de l'enveloppe tubulaire, dans la partie correspondant à la partie du tacton non emmanchée dans le support, c'est-à-dire dans la partie du tacton plus libre de mouvement.

Avantageusement, l'extrémité tactile de tout ou partie des tactons (interface tactile), de préférence de chaque tacton, comporte une surface de contact avec la peau dont la texture permet à l'extrémité tactile de ne pas avoir de mouvement relatif par rapport à la peau quand le tacton vibre.

Selon une possibilité intéressante de réalisation des tactons, chaque tacton est muni sur la face extérieure de son enveloppe, d'au moins un gorge destinée à recevoir la paroi et le bord périphérique d'une ouverture de l'au moins une plaque support souple de fixation.
En particulier, chaque tacton est muni sur la face extérieure de son enveloppe, d'au moins deux gorges dont l'une est destinée à recevoir la paroi et le bord périphérique d'une ouverture de la plaque externe, et dont l'autre est destinée à recevoir la paroi et le bord périphérique d'une ouverture de la plaque interne.

Pour une mise en place commode sur une surface corporelle, le dispositif comporte avantageusement au moins une attache permettant de mettre et de maintenir les extrémités tactiles des tactons d'un module matriciel, en contact avec une région dermique d'un individu; cette attache étant de préférence une sangle, avantageusement élastique, dont une partie est apposée contre la face extérieure de la plaque externe du support de fixation et dont au moins 2 autres parties forment deux brins permettant le maintien en position verrouillée du module matriciel de tactons, autour de la partie corporelle comprenant la région dermique concernée.

Selon une possibilité de l'invention, le dispositif de communication tactile peut être intégré :
* à tout ou partie d'un vêtement. L'invention englobe donc également le vêtement comportant un ou plusieurs dispositifs de communication tactile tels que définis dans le présent exposé ;
* mais aussi à tout autre objet adapté pour être positionné au niveau d'une partie du corps d'une personne ; L'invention englobe donc également tout objet autre qu'un vêtement comportant un ou plusieurs dispositifs de communication tactile tels que définis dans le présent exposé.

Dans un mode de réalisation préféré, les sources tactiles placées dans les tactons sont des vibreurs électriques et le dispositif inclut également :
- une alimentation électrique comprenant une source d'énergie électrique, ou une autre source d'énergie et un transformateur de cette énergie en énergie électrique, et des éléments conducteurs reliant cette source d'énergie électrique au moteur de chaque tacton en cheminant par son extrémité de base ;
- une ou plusieurs unités de contrôle électronique permettant de distribuer et réguler l'énergie électrique transmise à chaque tacton ;
- une ou plusieurs unités de gestion commandant, chacune, un ou plusieurs contrôleurs électroniques ;
l'ensemble de ce dispositif permettant d'activer un ou plusieurs tactons, simultanément ou indépendamment les uns des autres, c'est-à-dire en particulier pendant des durées et avec des puissances indépendantes, voire avec des amplitudes et des fréquences de vibration indépendantes.

Avantageusement, lorsque le support souple de fixation des tactons comprend une plaque interne et une plaque externe espacées l'une de l'autre par une couche interstitielle, l'une ou les plusieurs unités de contrôles électroniques et/ou l'une ou les plusieurs unités de gestion sont disposées entre la plaque interne et la plaque externe, au niveau de la couche interstitielle.

Selon un autre aspect, l'invention est relative à un système de communication tactile caractérisé en ce qu'il comprend :
- au moins un émetteur de signaux porteurs d'une information ;
- au moins un récepteur de ces signaux porteurs, apte à les transformer en signaux de communication tactile exprimant cette information, de préférence en signaux vibratoires, ledit récepteur comprenant au moins un dispositif de communication tactile selon l'invention.

Selon un autre aspect, l'invention est relative à un procédé de communication tactile caractérisé en ce qu'il consiste essentiellement à :
(i) mettre en oeuvre un système selon l'invention ;
(ii) générer des signaux porteurs d'une information au moyen de l'émetteur (a) ;
(iii) recevoir au moyen du récepteur (b) les signaux de l'étape (ii) et les transformer en signaux de communication tactile, de préférence en signaux vibratoires, exprimant cette information et susceptibles d'être détectés par la peau d'un individu destinataire de l'information.

### Définitions:

Dans tout le présent exposé, tout singulier désigne indifféremment un singulier ou un pluriel.

Les définitions données ci-après à titre d'exemples, peuvent servir à l'interprétation du présent exposé :
*"communication tactile"* : désigne un protocole de communication faisant intervenir des actionneurs générant des stimuli détectables par la peau, à savoir notamment le toucher stricto sensu (tact épicritique et protopathique) ; les vibrations (pallesthésie) ; les sensations positionnelles (statesthésie/kinesthésie) ; la pression (baresthésie) ; la température ; la douleur. Le terme *"tactile"* est ici synonyme du terme *"haptique".*
*"tacton"* : désigne un actionneur tactile/haptique apte à générer des stimuli tactiles/haptiques : tact, vibrations, positions, mouvements, pressions, température, douleur..., à partir de signaux qui sont, par exemple, de nature électrique ou électromagnétique, et qui sont porteurs d'un élément d'information exprimé par le tacton sous forme de stimulus tactile/haptique.
*"peau"* : désigne une surface cutanée d'un être humain ou animal porteur du dispositif de communication tactile et destinataire de l'information transmise par ce dispositif. La peau est pourvue de capteurs tactiles permettant la détection des stimuli tactiles générés par les tactons. La *"peau"* désigne également une peau artificielle pour robots équipés de capteurs tactiles.
*"interne-intérieur*/*externe-extérieur"* : s'entend par référence spatiale à la surface cutanée sur laquelle le dispositif de communication tactile est à être appliqué.
*"sensiblement"* : signifie qu'une variation de plus ou moins 10% est possible autour de la valeur donnée.

### Brève description des dessins

D'autres caractéristiques, détails et avantages de l'invention apparaîtront à la lecture de la description détaillée ci-après d'exemples de mise en oeuvre du procédé selon l'invention au moyen d'un mode préféré de réalisation du dispositif selon l'invention, en référence aux dessins annexés, dans lesquels :
**Fig. 1**

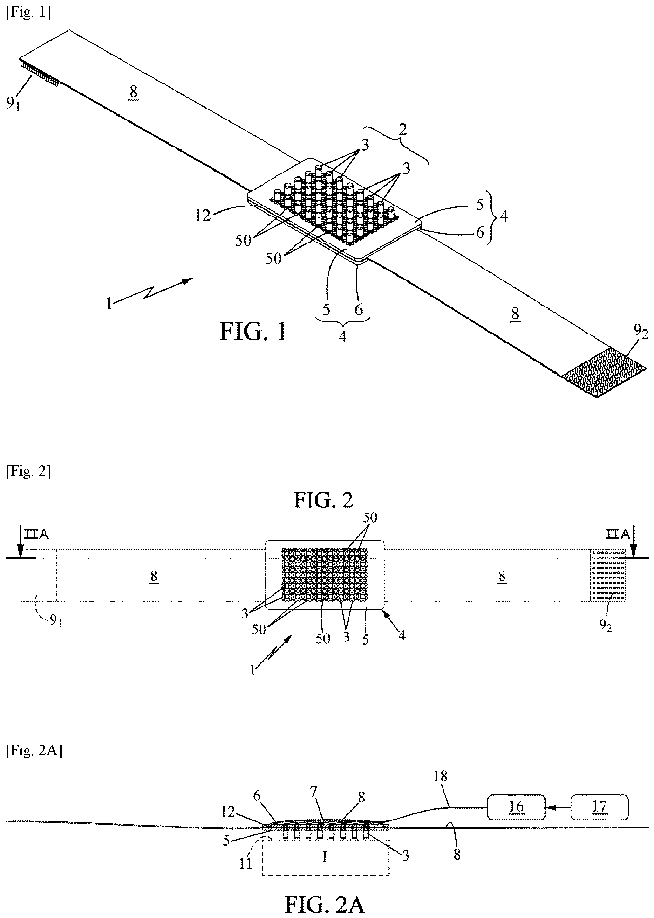

   [Fig. 1] est une vue en perspective du dessus du dispositif de communication tactile selon l'invention.
**Fig. 2**
   [Fig. 2] est une vue en élévation du dessus du dispositif de la figure 1.
**Fig. 2A**
   [Fig. 2A] est une vue du dispositif de la figure 2, en coupe longitudinale selon la ligne IIA/IIA de cette figure 2.
**Fig. 3**
   [Fig. 3] est une vue en perspective du dessus du module comprenant les actionneurs tactiles du dispositif selon l'invention.
**Fig. 4**

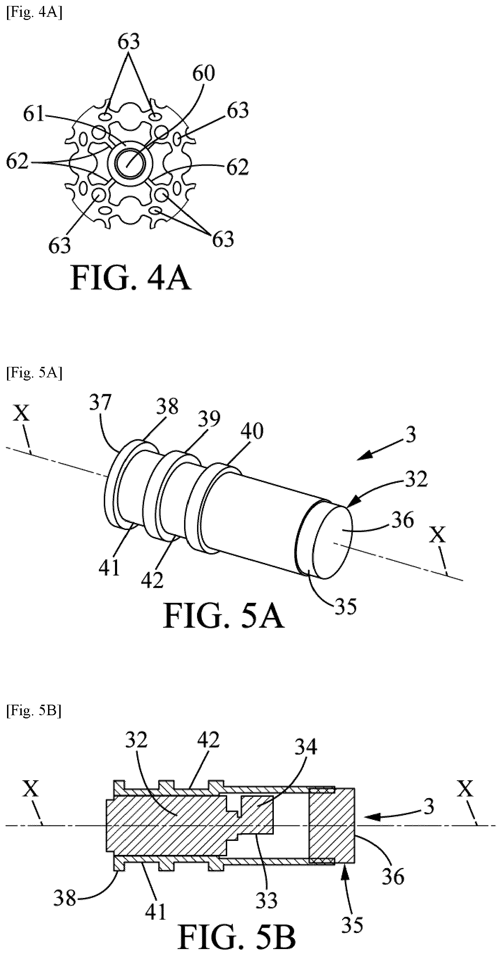

   [Fig. 4] est une vue de dessus de la plaque interne du support souple du dispositif de la figure 1.
**Fig. 4A**
   [Fig. 4A] est une vue agrandie de la loupe L de la figure 4.
**Fig. 5A**
   [Fig. 5A] est une vue en perspective d'un tacton du dispositif de la figure 1.
**Fig. 5B**

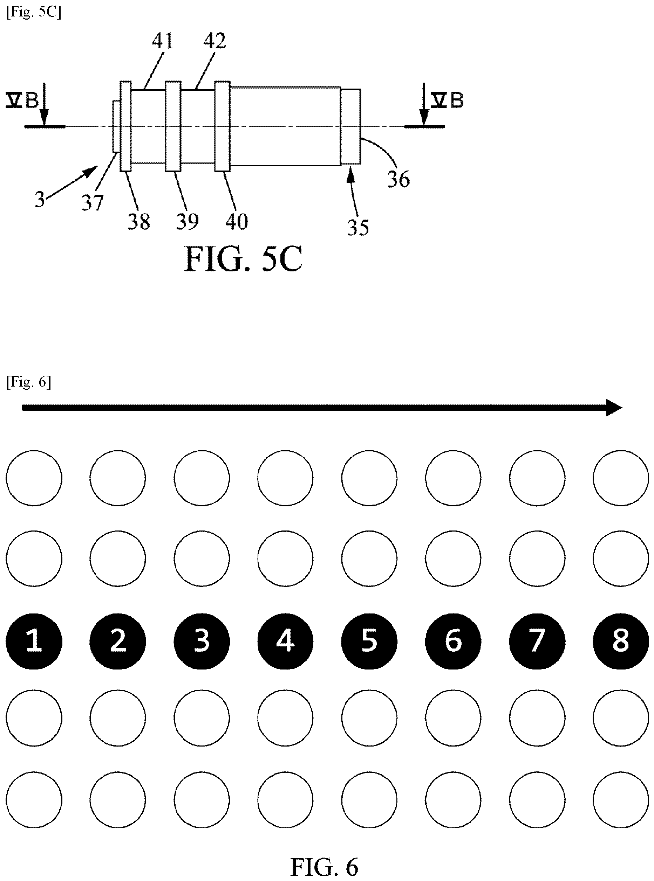

   [Fig. 5B] est une vue en coupe longitudinale du tacton montré sur la figure 5C.
**Fig. SC**
   [Fig. 5C] est une vue de côté du tacton du dispositif de la figure .1
**Fig. 6**
   [Fig. 6] est un exemple d'un motif de vibrations tracées sur la peau par le dispositif tactile de la figure 1.
**Fig. 7**

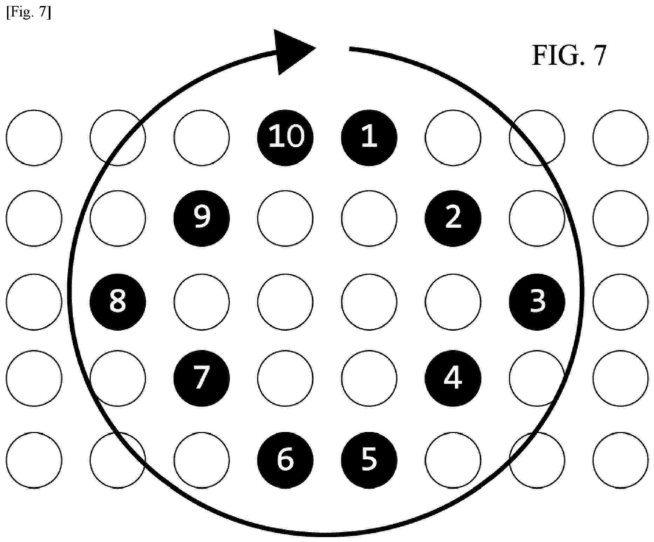

   [Fig. 7] est un exemple d'un motif de vibrations tracées sur la peau par le dispositif tactile de la figure 1.
**Fig. 8**

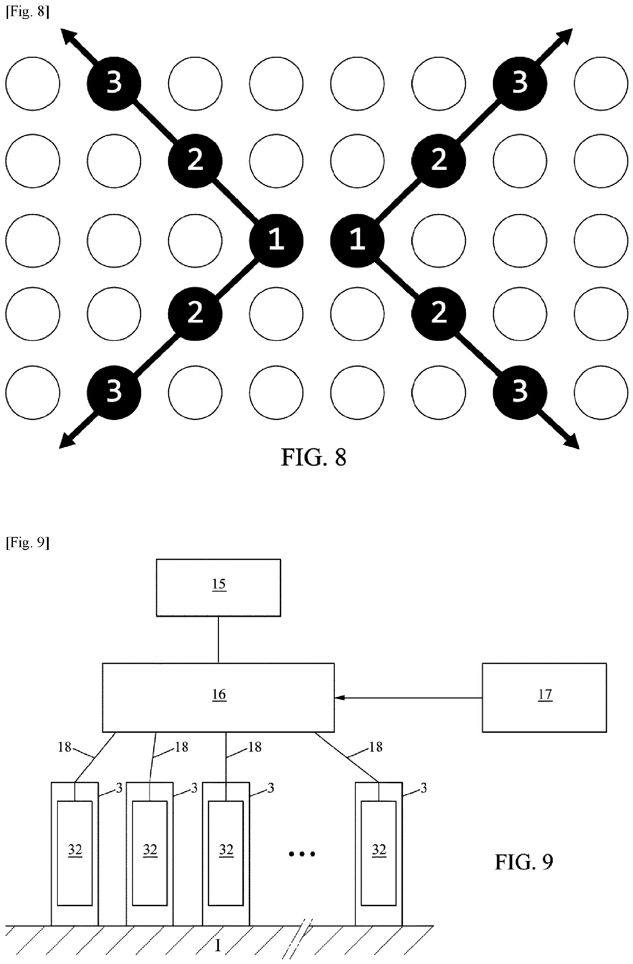

   [Fig. 8] est un exemple d'un motif de vibrations tracées sur la peau par le dispositif tactile de la figure 1.
**Fig. 9**
   [Fig. 9] est un schéma bloc du dispositif de la figure 1.

### Description détaillée

On décrit ci-après, à titre d'exemple non limitatif, un mode préféré de réalisation du dispositif selon l'invention.

Comme cela apparaît sur les figures 1 & 2, le dispositif 1 de communication tactile selon l'invention comprend, de l'intérieur vers l'extérieur :
* un module 2 comprenant une pluralité de tactons 3 ;
* un support souple 4 constitué par une plaque interne 5 et une plaque externe 6 ;
* une connectique 7 pour la transmission des signaux électriques porteurs d'information aux tactons 3 ;
* une attache constituée par une sangle 8 pour la mise en place et le maintien du dispositif 1 sur une surface cutanée 11.

Les tactons 3 sont des vibreurs. Les tactons 3 comprennent un corps cylindrique. On entend par corps cylindrique que le corps est un solide délimité par une surface cylindrique définie par le déplacement d'une droite génératrice le long d'une courbe directrice fermée, et par deux faces planes identiques parallèles. Chaque face plane du corps cylindrique peut présenter toute forme délimitée par une courbe fermée, par exemple une ellipse, un cercle, un polygone, un carré, un rectangle, un triangle. De plus, la droite génératrice peut présenter un angle avec l'une des faces planes inférieur ou égal à 90°.

Dans l'exemple de l'invention illustré sur les figures, le corps est délimité par un cylindre de révolution. La droite génératrice présente un angle de 90° avec les faces planes, autrement dit, la génératrice est perpendiculaire aux faces planes, et les faces planes sont délimitées par des cercles. Alternativement, le corps des tactons 3 pourrait prendre toute autre forme cylindrique telle que définie ci-dessus.

Le corps cylindrique présente une hauteur définie par la longueur de la droite génératrice prise entre les deux faces planes. L'axe d'élongation de chaque tacton correspond à l'axe de la hauteur. L'axe d'élongation est donc parallèle à la droite génératrice.

Les tactons présentent un facteur de forme F supérieur à 1. Le facteur de forme est défini par le rapport de la hauteur du corps cylindrique sur la plus grande longueur d'une des deux faces planes. La plus grande longueur de la face plane est définie comme étant la longueur du plus grand segment possible reliant deux points de la face plane.

Dans ce mode de réalisation préférée, les tactons 3 du module 2 comprennent un corps cylindrique allongé, c'est-à-dire par exemple avec un facteur de forme de l'ordre de 3 : longueur e.g 15 mm ; diamètre e.g. 5 mm.

Comme montré sur les figures 1 à 3, ces tactons 3 comprenant un corps cylindrique sont emmanchés dans des ouvertures 50 et 60 circulaires ménagées dans les plaques interne 5 et externe 6, respectivement, du support souple 4. Ce faisant, les tactons 3 sont maintenus en position sensiblement orthogonale par rapport aux plaques interne 5 et externe 6 du support souple 4, lorsque celui-ci est plan.
Le bloc I en pointillés montré sur la figure 2A symbolise l'individu I, dont une partie de la surface cutanée 11 est destinée à venir en contact, direct ou non, avec les extrémités libres 31 des tactons 3. L'axe d'élongation (X-X) de chaque tacton 3 est également sensiblement orthogonal à la surface cutanée 11, destinée à interagir tactilement avec le dispositif 1 selon l'invention.

Comme cela apparaît en détail sur les figures 5A, 5B, 5C, chaque tacton 3 comprenant un corps cylindrique, d'axe d'élongation (X-X), est constitué d'une enveloppe tubulaire 31 creuse contenant un moteur 32 équipé d'un arbre 33 s'étendant vers l'intérieur de l'enveloppe 31 et sur lequel est montée une masse excentrique 34, dont la rotation génère la vibration du tacton 3.

Chaque tacton 3 présente en outre une extrémité libre tactile 35 dont la face circulaire terminale est une zone tactile ou interface 36, destinée à être appliquée, directement ou non, sur la peau 11 d'un individu I.

Le moteur 23 est logé dans la partie de l'enveloppe tubulaire 31 correspondant à la partie du tacton 3 non emmanchée dans le support, c'est-à-dire dans la partie du tacton 3 plus libre de mouvement, proche de l'extrémité libre 35.

La zone ou interface tactile 36 de contact avec la peau, directement ou non, est dotée d'une surface qui présente un coefficient de frottement avec la peau, ou avec la/les couche/s intermédiaire/s, suffisant pour optimiser la perception de la vibration du tacton 3 par la peau. Cette surface de contact du tacton 3 peut, par exemple, être rugueuse et/ou être réalisée dans un matériau qui ne glisse pas sur la peau ou sur le vêtement intermédiaire. À titre d'exemples de matériaux appropriés, on peut citer les caoutchoucs naturels ou synthétiques ou le latex ou bien encore les élastomères silicones.

La zone ou interface tactile 36 est formée par la face plane du corps cylindrique située du côté de l'extrémité libre tactile, appelée face plane supérieure. De façon alternative, elle pourrait être formée par une capsule positionnée sur la face plane supérieure. La capsule pourrait avoir une forme de dôme ou d'hémisphère. Avantageusement, la capsule est venue de matière avec le corps cylindrique. Le tacton est alors formé en une seule pièce comprenant une partie correspondant au corps cylindrique et une partie correspondant à la capsule.

L'extrémité 37 opposée à l'extrémité libre tactile 35 est l'extrémité dite de base du tacton 3. Cette extrémité de base 37 est celle par laquelle s'opère la connexion du moteur 32 avec les fils électriques d'alimentation 18 qui débouchent dans la connectique 7. La face plane du corps cylindrique située du côté de l'extrémité de base 37 est appelée face plane inférieure. Chaque moteur 32 est alimenté séparément et indépendamment en signaux électriques qui lui permettent d'être entraînés en rotation et ainsi de faire vibrer le tacton 3.

Le choix des tactons 3 qui vibrent, la succession, la durée et la puissance de leurs vibrations, sont autant de paramètres qui rendent possible la réalisation, à discrétion, de motifs de signaux vibrationnels, aussi nombreux que variés. Chaque motif de signaux vibrationnels correspond un codage d'un élément de l'information, préalablement portés par des signaux électriques alimentant les moteurs 32 des tactons 3.

L'enveloppe tubulaire 31 comporte sur sa surface de révolution, de l'extrémité de base 37 vers l'extrémité libre tactile 35, trois collets 38, 39 et 40. Les collets 38 et 39 définissent une première gorge annulaire externe 41, tandis que le collet 39 délimite avec le collet 40 une deuxième gorge annulaire interne 42.

Ces gorges annulaires interne 42 et externe 41 sont destinées à recevoir les ouvertures 50,60 respectivement, prévues dans les plaques interne 5 et externe 6 du support souple 4 et dans lesquelles les tactons 3 sont destinés à être emmanchés.

La largeur de la gorge annulaire externe 41 (distance séparant les collets 38,39) correspond sensiblement à l'épaisseur de la plaque externe 6.

La largeur de la gorge annulaire interne 42 (distance séparant les collets 39,40) est sensiblement égale à l'épaisseur de la plaque interne 5.

La largeur du collet 39 peut être plus ou moins grande, de préférence comprise entre 2 mm et 6 mm pour obtenir une couche interstitielle 12 entre les plaques interne 5 et externe 6 plus ou moins large.

Les plaques interne 5 et externe 6 du support souple 4 sont pourvues d'ouvertures 50,60 respectivement, comme cela apparaît sur les figures 4 et 4A. Ces dernières montrent la plaque externe 6, mais conformément au mode préféré de réalisation ici exemplifié, la plaque interne 5 est similaire à cette plaque externe 6, à la différence près que cette plaque interne 5 ne comprend pas d'encoches 10 permettant le passage de la sangle 9 de maintien du dispositif 1 contre la peau I. En conséquence, tout ce qui est exposé ci-après en référence à la plaque externe 6 et aux ouvertures 60, vaut également pour la plaque interne 5 et ses ouvertures 50.

Ces 2 encoches 10, oblongues, sont symétriquement disposées dans les régions d'extrémités de la plaque externe 6.

Cette dernière comporte par ailleurs, entre les 2 encoches 10, les ouvertures 60 disposées selon un arrangement matriciel. Chacune de ces ouvertures 60 est en fait la lumière d'une bague 61 reliée par 4 pontets 62, au reste de la plaque externe 6. Les pontets 62 sont, de préférence, uniformément répartis sur le pourtour de la bague 61, c'est-à-dire qu'ils sont séparés les uns des autres par un écart angulaire de 90°. Ces pontets 62 sont réalisés dans le même matériau élastomère (par exemple caoutchouc naturel ou synthétique ou latex ou élastomère silicone) que le reste de la plaque externe 6.

Selon des variantes de cette forme préférée de réalisation des plaques interne 5 et externe 6 :
- le nombre de pontets peut être égal à 2 ou à 3, ou bien encore supérieur à 4.
- les pontets peuvent avoir une forme rectiligne, curviligne ou autre.
- les ouvertures 50,60 peuvent être de simples perforations circulaires.

Les zones de la plaque externe 6 auxquelles sont fixées les pontets sont ajourées : jours 63. Le pourcentage d'ajournement peut être modulé pour modifier la souplesse du support souple 4.

Cette structure des plaques interne 5 et externe 6 avec des bagues 51, 61 définissant les ouvertures 50,60, en suspension par rapport au reste des plaques, est un moyen efficace d'amortissement de la propagation transversale des vibrations des tactons 3.

Cette disposition, combinée avec le choix d'un matériau élastomère souple pour les plaques 5 et 6, contribue à donner au support une basse résonance vibrationnelle (par exemple de l'ordre de 10 Hertz) et obtenir des vibrations puissantes et précises spatialement pour chaque tacton 3.

Les tactons 3 sont enfoncés par leurs extrémités de base 37 dans les ouvertures 50 et 60 des plaques 5 et 6, de sorte que les bagues 51, 61 viennent se loger dans les gorges 41, 42 des tactons. Cet emmanchement dans les plaques et ce logement dans les gorges assurent le maintien en position orthogonale par rapport aux plaques 5 et 6, quand celles-ci sont en position plane. Pour des tactons 3 ayant par exemple une longueur de 15 mm, la partie de chaque tacton 3 non emmanchée dans les plaques 5 et 6 et s'étendant au-dessus de la plaque interne 5, a une longueur de l'ordre de 8 mm, ce qui correspond, dans cet exemple, à une longueur de la partie non emmanchée correspondant à 53 % de la longueur totale du tacton, soit une longueur de la partie emmanchée de 47 %.

La plaque interne 5 et la plaque externe 6 sont espacées l'une de l'autre d'une couche interstitielle 12, qui contribue également à la souplesse du support 4.

Le support souple 4 ainsi constitué du dispositif de communication tactile 1 selon invention, épouse au mieux la surface corporelle non plane, destinée à recevoir les stimuli vibratoires.

La souplesse de ce support 4 permet aux tactons 3, lors de leurs vibrations, de se déplacer angulairement autour de la position de repos orthogonale par rapport au support souple, lorsqu'il est plan. Le contact avec la peau I, d'un maximum, voire de la totalité des interfaces ou des zones tactiles terminales des tactons 3, s'en trouve également favorisé. En outre, ce support souple 4 limite, autant que faire se peut, la propagation transverse ou transversale des vibrations générées par les tactons mis en mouvement. Ces vibrations transversales parasites réduites permettent aux vibrations utiles d'être transmises à la peau 11 de l'individu I, d'avoir toute leur puissance (pas de dispersion d'énergie) et toute leur précision spatiale.

Dans une variante non représentée, le support de fixation 4 pourrait comprendre une unique plaque. Cette plaque pourrait être identique à la plaque externe.

La sangle 8 est une ceinture textile élastique qui permet le maintien du module 2 comprenant les tactons 3 contre la surface cutanée 11 à stimuler. Cette sangle 8 peut-être disposée autour d'une partie du corps tel que le tronc, le bras, la cuisse, le poignet, un doigt. Elle comporte des éléments de fermeture réversible 9₁,9₂, par exemple du type de boucles/crochets complémentaires (velcro^{®}). Une fois tendue autour de la partie du corps recevant le module 2 de tactons 3, les zones tactiles d'extrémité ou interface 32 sont maintenues en contact avec la peau 11.

La souplesse du support souple 4 de fixation permet au support de se déformer de façon réversible, pour suivre le rayon de courbure de la partie du corps sur laquelle le dispositif est disposé. En particulier, le support souple peut être déformé pour suivre un rayon de courbure inférieur ou égal à 15 cm pour être disposé autour du tronc. De préférence, il peut être déformé pour suivre un rayon de courbure inférieur ou égal à 2 cm pour être disposé autour du poignet. De préférence, il peut être déformé pour suivre un rayon de courbure inférieur ou égal à 1 cm pour être disposé autour d'un doigt.

Le support peut, selon l'invention, être dans un matériau présentant un module d'Young compris entre 0,001 GPa et 0,5 GPa, de préférence compris entre 0,001 GPa et 0,1 GPa.

L'arrangement matriciel formé par les tactons 3 du module 2, offre une haute densité de points de vibrations. À titre d'exemple, dans ce mode préféré de réalisation, le module 2 compte 40 vibreurs pour 50 cm², soit 4 vibreurs pour 10 cm². Cette importante densité de pixels tactiles permet de produire des motifs de vibrations tracés sur la peau 11, en grand nombre et de nature variée. Ces motifs sont obtenus par la mise en vibration simultanée ou séquentielle de plusieurs tactons 3 ou pixels tactiles. Cela permet de disposer d'un langage de communication tactile riche et élaboré.

Des exemples de ces motifs de vibrations tracés sur la peau 11 sont illustrés sur les figures 6 à 8. Sur la figure 6, l'activation successive de huit tactons 3 placés sur une même ligne d'un module 2 matriciel bidimensionnel correspond au tracé d'un motif rectiligne se déplaçant de la gauche vers la droite du module 2 matriciel. Sur la figure 7, l'activation successive de dix tactons du module 2 matriciel correspond au tracé d'un motif elliptique. Sur la figure 8, l'activation successive de trois sous-groupes de tactons 3 correspond au tracé d'un motif cruciforme, depuis le centre du module 2 matriciel vers ses extrémités.

En référence à la figure 9, on peut ajouter que la commande de la mise en vibration des tactons 3 se fait par l'intermédiaire des signaux électriques générés par une alimentation électrique 15, sous la férule d'un ou plusieurs contrôleurs électroniques 16 distribuant et régulant les signaux électriques transmis à chaque tacton 3. Sont également prévues, une ou plusieurs unités de gestion 17 commandant un ou plusieurs contrôleurs électroniques 16.

Des éléments conducteurs 18 (fils électriques) permettent d'acheminer les signaux électriques entre l'alimentation électrique 15, les contrôleurs électroniques 16 et les moteurs 32 des tactons 3 du module 2.

Ces fils électriques 18 se trouvent au moins en partie dans la connectique 7 disposée entre le support souple 4 et la sangle 8.

Selon une 1^{ère} possibilité de réalisation, les contrôleurs électroniques 16 et l'unité ou les unités de gestion 17 se trouvent à l'extérieur du support souple 4.

Selon une 2^{ème} possibilité de réalisation, les contrôleurs électroniques 16, voire l'unité ou les unités de gestion 17 se trouvent en partie dans la connectique 7 disposée entre le support souple 4 et la sangle 9.

Dans l'exemple représenté où le support souple 4 de fixation des tactons 3 comprend une plaque interne 5 et une plaque externe 6 espacées l'une de l'autre par une couche interstitielle, l'une ou les plusieurs unités de contrôles électroniques 16 et/ou l'une ou les plusieurs unités de gestion 17 sont disposées entre la plaque interne 5 et la plaque externe 6, au niveau de la couche interstitielle, ce qui permet de limiter l'encombrement de dispositif.

Dans cette connectique 7, les fils électriques 18 sont reliés aux moteurs 32 par les extrémités de base 37 des tactons 3.

Les contrôleurs électroniques 16 ont pour fonction de distribuer et de réguler la chaîne des signaux électriques transmis à chaque tacton 3. Comme exemples de contrôleurs électroniques 16, on peut citer un driver de moteur ou un microcontrôleur.

L'unité ou les unités de gestion 17 comprennent avantageusement une gestion du temps permettant de déclencher les tactons 3 à des instants précis dans le temps et pendant des durées données. Pour cela, l'unité ou les unités de gestion 17 comportent une base de temps capable de générer un signal d'horloge. À titre d'illustrations d'unités de gestion 17 appropriées pour le dispositif selon l'invention, on peut mentionner un microprocesseur ou un circuit logique programmable. Il peut s'agir par exemple des produits commerciaux suivants : Arduino^{®}, Raspberry Pi^{®}.

La mise en vibration d'un ou plusieurs tactons 3 par alimentation simultanée ou séquentielle des moteurs 32, génère un motif de signaux vibratoires qui est tracé sur la peau I et qui est détecté par les mécanorécepteurs de cette dernière.

Les durées, les puissances, les amplitudes et/ou les fréquences des tactons 3 peuvent être indépendantes les unes des autres.

L'énergie électrique permettant la genèse des signaux électriques peut provenir du secteur, d'accumulateurs électriques rechargeables par le secteur ou par toute autre énergie alternative solaire, éolienne.... Toute autre source d'énergie transformable en industrie électrique peut également être envisagée.

Le système de communication tactile selon invention comprend :
(a) au moins un émetteur de signaux porteurs d'une information ;
(b) au moins un récepteur de ces signaux porteurs, apte à les transformer en signaux de communication tactile, de préférence en signaux vibratoires, exprimant cette information, ledit récepteur comprenant au moins un dispositif de communication tactile selon l'invention.

L'émetteur (a) de signaux, par exemple électriques, électromagnétiques ou optiques, porteur d'une information peut être une télécommande ou un "smartphone", permettant à un opérateur externe de déclencher manuellement un motif tactile sur le porteur du récepteur (b). L'émetteur (a) de signaux peut également être un système de capteurs, permettant au porteur du récepteur (b) de recevoir un motif tactile en fonction de données contextuelles.

La communication entre l'émetteur (a) et le récepteur (b) peut s'effectuer selon un mode filaire ou non filaire. A titre d'exemple, une télécommande peut transmettre un signal de déclenchement de motif tactile sur le porteur du récepteur (b) via une communication Bluetooth^{®} ou Wifi.

Le procédé de communication tactile selon l'invention dans lequel le système susvisé est mis en oeuvre, consiste essentiellement à (i) générer des signaux d'un langage de communication tactile au moyen de l'émetteur (a) ; les différents signaux de ce langage étant organisés en motifs vibratoires tactiles ayant chacun une signification ; et (ii) à recevoir des signaux générés à l'étape (i) au moyen du récepteur (b).

Plus précisément, ce procédé peut-être illustré de la manière suivante:
1) Un opérateur A porteur de l'émetteur (a) souhaite communiquer une information X à un opérateur B porteur du récepteur (b) et d'au moins un dispositif de communication tactile selon l'invention.
2) Les opérateurs A et B partagent un langage tactile commun. Ils ont appris que l'information X est associée à un motif tactile donné, par exemple le motif tactile elliptique décrit à la figure 7.
3) L'opérateur A déclenche à distance le motif tactile sur le dispositif de communication tactile porté par l'opérateur B en appuyant par exemple sur un bouton de sa télécommande.
4) Le signal est transmis au récepteur (b) et transformé par l'unité de gestion 17 en signaux vibratoires correspondant au tracé du motif elliptique sur un module 2 de tactons 3.
5) Le motif elliptique est perçu par l'opérateur B et interprété comme correspondant à l'information X.

### Liste des signes de référence

-1- : dispositif de communication tactile ; -2- : module matriciel de tactons ;-3- : tacton; -4- support souple; -5- plaque interne ; -6- plaque externe ; -7- connectique ; -8-sangle ; -9₁,9₂- éléments de fermeture réversible; -10- encoche oblongue ; -I- individu porteur du dispositif de communication tactile -11- surface cutanée de l'individu destinée à venir en contact les tactons ; -12-couche interstitielle ; -15- alimentation électrique ; -16-contrôleurs électroniques ; -17- unité de gestion ; -18- éléments conducteurs ; -31-enveloppe tubulaire creuse ; -32- moteur ; -33- arbre du moteur ; -34- masse excentrique ; - 35- extrémité libre tactile du tacton 3; -36- zone ou interface tactile ; -37- extrémité de base du tacton opposée à l'extrémité libre ; -38,39,40- collet ; -41- gorge annulaire externe ; -42- gorge annulaire interne ; -50- ouverture circulaire ménagée dans la plaque interne ; - 51- bague ; -60- ouverture circulaire ménagée dans la plaque externe ; 61- bague ; -62-pontet ; -63- jour .

## Revendications

1. Dispositif (1) de communication tactile équipé d'au moins un module (2) comprenant des actionneurs tactiles (3), de préférence vibratoires, ou "tactons" comportant chacun au moins une zone tactile (36) destinée à être appliquée, directement ou non, sur la peau (11) d'un individu (I);et dans lequel:
• la zone tactile (36) de chaque tacton (3) est disposée au voisinage de l'une (35) de ses extrémités (35,37), dénommée extrémité libre tactile (35) et opposée à l'extrémité de base (37) du tacton (3) ;
• chaque tacton comprend un corps cylindrique présentant une hauteur, une face plane inférieure et une face plane supérieure identiques, la face plane inférieure étant située du côté de l'extrémité de base (37) et la face plane supérieure étant située du côté de l'extrémité libre tactile (35) ;
• le corps cylindrique de chaque tacton (3) présente un facteur de forme F, défini par le rapport de sa hauteur sur la plus grande longueur des faces planes inférieure et supérieure, tel que F > 1 ; de préférence 4 ≥ F > 1 ; et, plus préférentiellement encore, 4 ≥ F ≥ 2 ;
**caractérisé en ce que**
• chaque tacton (3) contient au moins une source tactile (32,33,34), de préférence vibratoire ;
• les tactons (3) sont reliés par leurs extrémités de base (37) à un support souple (4) de fixation comprenant au moins une plaque (5,6); chaque tacton (3) étant en partie emmanché, par son extrémité de base (37) , dans une ouverture (50,60) de la plaque (5,6) du support souple (4), la longueur de la partie emmanchée du tacton (3) étant, de préférence, comprise entre 25% et 60% de la longueur du tacton (3) ;
• et chaque plaque (5, 6) du support souple (4) de fixation est réalisée dans un matériau souple, présentant un module d'Young compris entre 0,001 GPa et 0,5 GPa, de préférence choisi dans la famille des élastomères

2. Dispositif (1) selon la revendication 1, **caractérisé en ce que** la densité des tactons (3) est comprise entre 1 et 300 tactons (3) pour 100 cm², de préférence entre 1 et 50 tactons (3) pour 10 cm², et, plus préférentiellement encore, entre 1 et 20 tactons (3) pour 10 cm².

3. Dispositif (1) selon la revendication 1 ou 2, **caractérisé en ce que** les tactons (3) forment un arrangement matriciel (2).

4. Dispositif (1) selon l'une au moins des revendications précédentes **caractérisé en ce que** le support souple (4) de fixation des tactons (3) comprend une plaque interne (5) et au moins une plaque externe (6) ; et **en ce que** chaque tacton (3) est en partie emmanché, par son extrémité de base (37), dans une ouverture (50,60) de la plaque interne (5) et dans une ouverture (60) de la plaque externe (6) du support souple (4); de préférence de telle sorte que la plaque interne (5) et la plaque externe (6) soient espacées l'une de l'autre par une couche interstitielle (12).

5. Dispositif (1) selon l'une au moins des revendications précédentes, **caractérisé en ce que** tout ou partie des ouvertures (50,60) de chaque plaque (5, 6) du support souple (4) de fixation des tactons (3), sont définie chacune par une bague (61) dissociée du reste de la plaque et reliée à celle-ci par au moins deux pontets (62), de préférence quatre ; cette bague (61) et ces pontets (62) étant avantageusement réalisés dans le même matériau que celui de la plaque (5, 6).

6. Dispositif (1) selon la revendication 5**caractérisé en ce que** les zones du support souple, de préférence de chaque plaque (5, 6), auxquelles sont reliés les pontets (62) des bagues (61) délimitant les ouvertures (50,60) de fixation des tactons (3), sont ajourées.

7. Dispositif (1) selon l'une au moins des revendications précédentes **caractérisé en ce que** chaque tacton (3) comprend une source vibratoire, de préférence un moteur (32) apte à entraîner un arbre (33) porteur d'au moins une masse (34) excentrique ou un vibreur à résonnance linéaire.

8. Dispositif (1) selon l'une au moins des revendications précédentes **caractérisé en ce que** chaque tacton (3) comprend une enveloppe (31) tubulaire contenant la source (32, 33, 34), de préférence vibratoire, cette enveloppe étant, avantageusement de section transversale droite circulaire.

9. Dispositif (1) selon l'une au moins des revendications précédentes, **caractérisé en ce que** l'extrémité tactile (35) de tout ou partie des tactons (3), de préférence de chaque tacton (3), comporte une surface de contact (36) avec la peau (11) dont la texture permet à l'extrémité tactile (35) de ne pas avoir de mouvement relatif par rapport à la peau (11) quand le tacton (3) vibre.

10. Dispositif (1) selon la revendication 4 et 8 et, éventuellement, l'une au moins des autres revendications précédentes **caractérisé en ce que** chaque tacton est muni sur la face extérieure de son enveloppe (31), d'au moins deux gorges (41,42) dont l'une (41) est destinée à recevoir la paroi et le bord périphérique d'une ouverture (60) de la plaque externe (6), et dont l'autre (42) est destinée à recevoir la paroi et le bord périphérique d'une ouverture (50) de la plaque interne (41).

11. Dispositif (1) selon l'une au moins des revendications précédentes, **caractérisé en ce qu'**il comporte au moins une attache (8) permettant de mettre et de maintenir les extrémités tactiles (35) des tactons (3) d'un module matriciel (2), en contact avec une région dermique (11) d'un individu (I); cette attache étant de préférence une sangle (8), avantageusement élastique, dont une partie est apposée contre la face extérieure de la plaque externe (6) du support (4) de fixation et dont au moins deux autres parties forment deux brins permettant le maintien en position verrouillée du module (2) de tactons, autour de la partie corporelle comprenant la région dermique (11) concernée.

12. Dispositif (1) selon l'une au moins des revendications précédentes, **caractérisé en ce que** les sources tactiles placées dans les tactons (3) sont des vibreurs électriques (32,33,34) et **en ce qu'**il inclut également :
• une alimentation électrique (15) comprenant une source d'énergie électrique, ou une autre source d'énergie et un transformateur de cette énergie en énergie électrique, et des éléments conducteurs (18) reliant cette source d'énergie électrique au moteur (32) de chaque tacton (3) en cheminant par son extrémité de base (37) ;
• une ou plusieurs unités (16) de contrôle électronique permettant de distribuer et réguler l'énergie électrique transmise à chaque tacton (3) ;
• une ou plusieurs unités (17) de gestion commandant, chacune, un ou plusieurs contrôleurs électroniques (16) ;
l'ensemble de ce dispositif (1) permettant d'activer un ou plusieurs tactons (3), simultanément ou indépendamment les uns des autres.

13. Système de communication tactile **caractérisé en ce qu'**il comprend :
a) au moins un émetteur de signaux porteurs d'une information ;
b) au moins un récepteur de ces signaux porteurs, apte à les transformer en signaux de communication tactile, de préférence en signaux vibratoires, exprimant cette information, ledit récepteur comprenant au moins un dispositif (1) de communication tactile selon l'une au moins des revendications 1 à 12.

14. Procédé de communication tactile **caractérisé en ce qu'**il consiste essentiellement à :
i) mettre en oeuvre un système selon la revendication 13 ;
ii) générer des signaux porteurs d'une information au moyen de l'émetteur a) ;
iii) recevoir au moyen du récepteur b) les signaux de l'étape ii) et les transformer en signaux de communication tactile, de préférence en signaux vibratoires, exprimant cette information et susceptible d'être détectés par la peau (11) d'un individu (I) destinataire de l'information.

## Patentansprüche

1. Vorrichtung (1) zur taktilen Kommunikation, die mit wenigstens einem Modul (2) ausgestattet ist, das taktile, bevorzugt vibrierende Aktuatoren (3) oder "Tactons" umfasst, die jeweils wenigstens eine taktile Zone (36) aufweisen, die dazu bestimmt ist, direkt oder nicht direkt auf die Haut (11) einer Person (I) aufgebracht zu werden; und wobei
• die taktile Zone (36) jedes Tactons (3) in der Nähe eines (35) seiner Enden (35, 37) angeordnet ist, das als freies taktiles Ende (35) bezeichnet wird und dem Basisende (37) des Tactons (3) gegenüberliegt,
• jeder Tacton einen zylindrischen Körper umfasst, der eine Höhe, eine untere ebene Fläche und eine obere ebene Fläche, die identisch sind, aufweist, wobei sich die untere ebene Fläche auf der Seite des Basisendes (37) und die obere ebene Fläche auf der Seite des freien taktilen Endes (35) befindet;
• der zylindrische Körper jedes Tactons (3) einen Formfaktor F aufweist, der durch das Verhältnis seiner Höhe zu der größten Länge der unteren und oberen flachen Seiten definiert ist, so dass F > 1; bevorzugt 4 ≥ F ≥ 1; und stärker bevorzugt 4 ≥ F ≥ 2;
**dadurch gekennzeichnet, dass**
• jeder Tacton (3) wenigstens eine taktile Quelle (32, 33, 34), bevorzugt eine Vibrationsquelle, umfasst;
• die Tactons (3) mit ihren Basisenden (37) mit einer flexiblen Befestigungshalterung (4) verbunden sind, die wenigstens eine Platte (5 6) umfasst, wobei jedes Tacton (3) mit seinem Basisende (37) teilweise in eine Öffnung (50, 60) der Platte (5, 6) der flexiblen Halterung (4) eingepresst ist, wobei die Länge des eingepressten Teils des Tactons (3) bevorzugt zwischen 25 % und 60 % der Länge des Tactons (3) beträgt;
• und jede Platte (5, 6) der flexiblen Halterung (4) zur Befestigung aus einem flexiblen Material hergestellt ist, das ein Young'sches Modul zwischen 0,001 GPa und 0,5 GPa aufweist, bevorzugt gewählt aus der Familie der Elastomere.

2. Vorrichtung (1) nach Anspruch 1, **dadurch gekennzeichnet, dass** die Dichte der Tactons (3) zwischen 1 und 300 Tactons (3) pro 100 cm², bevorzugt zwischen 1 und 50 Tactons (3) pro 10 cm², und stärker bevorzugt zwischen 1 und 20 Tactons (3) pro 10 cm² liegt.

3. Vorrichtung (1) nach Anspruch 1 oder 2, **dadurch gekennzeichnet, dass** die Tactons (3) eine Matrixanordnung (2) bilden.

4. Vorrichtung (1) nach wenigstens einem der vorhergehenden Ansprüche, **dadurch gekennzeichnet, dass** der flexible Träger (4) zur Befestigung der Tactons (3) eine innere Platte (5) und wenigstens eine äußere Platte (6) umfasst; und dass jeder Tacton (3) mit seinem Basisende (37) teilweise in eine Öffnung (50, 60) der inneren Platte (5) und in eine Öffnung (60) der äußeren Platte (6) der flexiblen Halterung (4) eingepresst ist, bevorzugt derart, dass die innere Platte (5) und die äußere Platte (6) durch eine Zwischenschicht (12) zueinander beabstandet sind.

5. Vorrichtung (1) nach wenigstens einem der vorhergehenden Ansprüche, **dadurch gekennzeichnet, dass** alle oder ein Teil der Öffnungen (50, 60) jeder Platte (5, 6) des flexiblen Trägers (4) zur Befestigung der Tactons (3) jeweils durch einen Ring (61) definiert sind, der vom Rest der Platte getrennt und mit dieser durch wenigstens zwei Brücken (62), bevorzugt vier Brücken, verbunden ist, wobei dieser Ring (61) und diese Brücken (62) vorteilhafterweise aus demselben Material wie das der Platte (5, 6) hergestellt sind.

6. Vorrichtung (1) nach Anspruch 5, **dadurch gekennzeichnet, dass** die Bereiche des flexiblen Trägers, bevorzugt jeder Platte (5, 6), mit denen die Brücken (62) der Ringe (61) verbunden sind, die die Öffnungen (50, 60) zur Befestigung der Tactons (3) begrenzen, durchbrochen sind.

7. Vorrichtung (1) nach wenigstens einem der vorhergehenden Ansprüche, **dadurch gekennzeichnet, dass** jeder Tacton (3) eine Vibrationsquelle umfasst, bevorzugt einen Motor (32), der dazu geeignet ist, eine Welle (33) anzutreiben, die wenigstens eine exzentrische Masse (34) trägt, oder einen Vibrator mit linearer Resonanz.

8. Vorrichtung (1) nach wenigstens einem der vorhergehenden Ansprüche, **dadurch gekennzeichnet, dass** jeder Tacton (3) eine rohrförmige Hülle (31) umfasst, die die Quelle (32, 33, 34), bevorzugt eine Vibrationsquelle, umfasst, wobei diese Hülle vorteilhafterweise einen kreisförmigen Querschnitt aufweist.

9. Vorrichtung (1) nach wenigstens einem der vorhergehenden Ansprüche, **dadurch gekennzeichnet, dass** das taktile Ende (35) aller oder eines Teils der Tactons (3), bevorzugt jeder Tacton (3), eine Kontaktfläche (36) mit der Haut (11) aufweist, deren Textur es dem taktilen Ende (35) ermöglicht, keine relative Bewegung in Bezug auf die Haut (11) zu haben, wenn der Tacton (3) vibriert.

10. Vorrichtung (1) nach Anspruch 4 und 8 und gegebenenfalls wenigstens einem der anderen vorhergehenden Ansprüche, **dadurch gekennzeichnet, dass** jeder Tacton auf der Außenseite seiner Hülle (31) mit wenigstens zwei Rillen (41, 42) versehen ist, von denen eine (41) dazu bestimmt ist, die Wand und den Umfangsrand einer Öffnung (60) der äußeren Platte (6) aufzunehmen, und von denen die andere (42) dazu bestimmt ist, die Wand und den Umfangsrand einer Öffnung (50) der inneren Platte (41) aufzunehmen.

11. Vorrichtung (1) nach wenigstens einem der vorhergehenden Ansprüche, **dadurch gekennzeichnet, dass** sie wenigstens eine Befestigung (8) umfasst, die es ermöglicht, die taktilen Enden (35) der Tactons (3) eines Matrixmoduls (2) in Kontakt mit einer Hautregion (11) eines Individuums (1) zu bringen und zu halten; wobei diese Befestigung bevorzugt ein vorteilhaft elastischer Gurt (8) ist, von dem ein Teil an der Außenseite der Außenplatte (6) des Befestigungsträgers (4) angelegt ist und von dem wenigstens zwei andere Teile zwei Stränge bilden, die das Halten des Moduls (2) der Taktons in verriegelter Position um den Körperteil mit der betreffenden Hautregion (11) herum ermöglichen.

12. Vorrichtung (1) nach wenigstens einem der vorhergehenden Ansprüche, **dadurch gekennzeichnet, dass** die in den Taktons (3) angeordneten Tastquellen elektrische Vibratoren (32, 33, 34) sind und dass sie ferner Folgendes umfasst:
• eine Stromversorgung (15), die eine elektrische Energiequelle oder eine andere Energiequelle und einen Transformator für diese Energie in elektrische Energie umfasst, und leitende Elemente (18), die diese elektrische Energiequelle mit dem Motor (32) jedes Tactons (3) verbinden, indem sie durch dessen Basisende (37) verlaufen;
• eine oder mehrere elektronische Steuereinheiten (16) zum Verteilen und Regulieren der elektrischen Energie, die an jeden Tacton (3) übertragen wird;
• eine oder mehrere Verwaltungseinheiten (17), die jeweils eine oder mehrere elektronische Steuerungen (16) steuern;
wobei es die gesamte Vorrichtung (1) ermöglicht, einen oder mehrere Tactons (3) gleichzeitig oder unabhängig voneinander zu aktivieren.

13. Taktiles Kommunikationssystem, **dadurch gekennzeichnet, dass** es Folgendes umfasst:
a) wenigstens einen Sender von Signalen, die eine Information tragen;
b) wenigstens einen Empfänger dieser Trägersignale, der sie in taktile Kommunikationssignale, bevorzugt in Vibrationssignale, umwandeln kann, die diese Information ausdrücken, wobei der Empfänger wenigstens eine Vorrichtung (1) zur taktilen Kommunikation nach wenigstens einem der Ansprüche 1 bis 12 umfasst.

14. Verfahren zur taktilen Kommunikation, **dadurch gekennzeichnet, dass** es im Wesentlichen aus Folgendem besteht:
i. Implementieren eines Systems nach Anspruch 13;
ii. Erzeugen von Signalen, die eine Information tragen, mittels des Senders a);
iii. Empfangen der Signale aus Schritt ii) mittels des Empfängers b) und Umwandeln in taktile Kommunikationssignale, bevorzugt in Vibrationssignale, die diese Information ausdrücken und von der Haut (11) eines Individuums (I), das Ziel der Information ist, erfasst werden können.

## Claims

1. A tactile communication device (1) equipped with at least one module (2) comprising tactile, preferably vibratory, actuators (3) or "tactons" each comprising at least one tactile zone (36) intended to be applied, directly or indirectly, on the skin (11) of an individual (I); and wherein:
- the tactile zone (36) of each tacton (3) is disposed in the vicinity of one (35) of the ends (35,37) thereof, called the free tactile end (35) and opposite to the base end (37) of the tacton (3);
- each tacton comprises a cylindrical body having a height, a lower planar face and an identical upper planar face, the lower planar face being located on the side of the base end (37) and the upper planar face being located on the side of the free tactile end (35);
- the cylindrical body of each tacton (3) has a form factor F, defined by the ratio of its height to the greatest length of the lower and upper planar faces, such that F > 1; preferably 4 ≥ F > 1; and, more preferably still, 4 ≥ F ≥ 2;
**characterised in that**
- each tacton (3) contains at least one tactile, preferably vibratory, source (32, 33, 34);
- the tactons (3) are connected, by the base ends (37) thereof, to a flexible fastening support (4) comprising at least one plate (5, 6); each tacton (3) being partially fitted, by the base end (37) thereof, in an opening (50, 60) of the plate (5, 6) of the flexible support (4), the length of the fitted portion of the tacton (3) preferably being comprised between 25% and 60% of the length of the tacton (3);
- and each plate (5, 6) of the flexible fastening support (4) is made of a flexible material, having a Young's modulus comprised between 0.001 GPa and 0.5 GPa, preferably selected from the family of elastomers.

2. The device (1) according to claim 1, **characterised in that** the density of the tactons (3) is comprised between 1 and 300 tactons (3) per 100 cm², preferably between 1 and 50 tactons (3) per 10 cm², and, even more preferably, between 1 and 20 tactons (3) per 10 cm².

3. The device (1) according to claim 1 or 2, **characterised in that** the tactons (3) form a matrix arrangement (2).

4. The device (1) according to at least one of the preceding claims, **characterised in that** the flexible support (4) for fastening the tactons (3) comprises an inner plate (5) and at least one outer plate (6); and **in that** each tacton (3) is partially fitted, by the base end (37) thereof, in an opening (50,60) of the inner plate (5) and in an opening (60) of the outer plate (6) of the flexible support (4); preferably such that the inner plate (5) and the outer plate (6) are spaced apart from each other by an interstitial layer (12).

5. The device (1) according to at least one of the preceding claims, **characterised in that** all or part of the openings (50, 60) of each plate (5, 6) of the flexible support (4) for fastening the tactons (3), are each defined by a ring (61) dissociated from the rest of the plate and connected thereto by at least two, preferably four, bridges (62); this ring (61) and these bridges (62) being advantageously made of the same material as that of the plate (5, 6).

6. The device (1) according to claim 5, **characterised in that** the zones of the flexible support, preferably of each plate (5, 6), to which the bridges (62) of the rings (61) delimiting the openings (50, 60) for fastening the tactons (3) are connected, are perforated.

7. The device (1) according to at least one of the preceding claims, **characterised in that** each tacton (3) comprises a vibratory source, preferably a motor (32) capable of driving a shaft (33) carrying at least one eccentric mass (34) or a linear resonant vibrator.

8. The device (1) according to at least one of the preceding claims, **characterised in that** each tacton (3) comprises a tubular casing (31) containing the source (32, 33, 34), preferably vibratory, this casing being, advantageously, of circular straight cross-section.

9. The device (1) according to at least one of the preceding claims, **characterised in that** the tactile end (35) of all or part of the tactons (3), preferably of each tacton (3), includes a contact surface (36) with the skin (11) whose texture allows the tactile end (35) not to have any relative movement relative to the skin (11) when the tacton (3) vibrates.

10. The device (1) according to claims 4 and 8 and, possibly, at least one of the other preceding claims, **characterised in that** each tacton is provided, on the external face of the casing (31) thereof, with at least two grooves (41,42), one of which (41) is intended to receive the wall and the peripheral edge of an opening (60) of the outer plate (6), and the other (42) of which is intended to receive the wall and the peripheral edge of an opening (50) of the inner plate (41).

11. The device (1) according to at least one of the preceding claims, **characterised in that** it includes at least one fastener (8) allowing putting and maintaining the tactile ends (35) of the tactons (3) of a matrix module (2), in contact with a dermal region (11) of an individual (I); this fastener preferably being a strap (8), which is advantageously elastic, a portion of which is affixed against the external face of the outer plate (6) of the fastening support (4) and at least two other portions of which form two strands allowing holding the tactons in the locked position of the module (2), around the body portion comprising the concerned dermal region (11).

12. The device (1) according to at least one of the preceding claims, **characterised in that** the tactile sources placed in the tactons (3) are electric vibrators (32, 33, 34) and **in that** it also includes:
- a power supply (15) comprising a source of electrical energy, or another source of energy and a transformer of this energy into electrical energy, and conductive elements (18) connecting this source of electrical energy to the motor (32) of each tacton (3) by passing through the base end (37) thereof;
- one or more electronic monitoring units (16) allowing distributing and regulating the electrical energy transmitted to each tacton (3);
- one or more management units (17), each controlling one or more electronic controllers (16);
the whole of this device (1) allowing activating one or more tactons (3), simultaneously or independently of each other.

13. A tactile communication system **characterised in that** it comprises:
a) at least one transmitter of signals carrying an information item;
b) at least one receiver of these carrier signals, capable of transforming them into tactile communication signals, preferably into vibratory signals, expressing this information item, said receiver comprising at least one tactile communication device (1) according to at least one of claims 1 to 12.

14. A tactile communication method **characterised in that** it mainly consists in:
i) implementing a system according to claim 13;
ii) generating signals carrying an information item by means of the transmitter a);
iii) receiving, by means of the receiver b), the signals of step ii) and transforming them into tactile communication signals, preferably into vibratory signals, expressing this information item and likely to be detected by the skin (11) of an individual (I) who is the recipient of the information.
